# DEMANDE DE BREVET EUROPEEN

(11) **EP 4 692 635 A1**
(43) Date de publication de la demande: **11.02.2026**
(21) Numéro de dépôt: 25194405.4
(22) Date de dépôt: 06.08.2025
(51) Int. Cl.: F17C 3/08

(54) **UNITÉ DE STOCKAGE DE FLUIDE CRYOGÉNIQUE ET PROCÉDÉ DE FABRICATION CORRESPONDANT**

(30) Priorité: 07.08.2024 FR 2408758
(71) Demandeur: Faurecia Hydrogen Solutions France, 92000 Nanterre (FR)
(72) Inventeur: GREBER, Frederic, 25150 ECOT (FR); FOURCAUDOT, Yannick, 70400 LUZE (FR)
(74) Mandataire: Lavoix

(57) **Abrégé**

L'unité de stockage comprend un réservoir interne (3), un réservoir externe (7), et une suspension (8) suspendant le réservoir interne (3) au réservoir externe (7) ;
la suspension (8) comprenant une liaison (19) comportant :
- une manchette (23) en un matériau composite présentant un axe central (C') ;
- une liaison proximale (25) d'une extrémité axiale proximale (27) de la manchette (23) au réservoir interne (3) ;
- une liaison distale (29) d'une extrémité axiale distale (31) de la manchette (23) au réservoir externe (7) ;

la liaison proximale (25) comprenant :
- un corps (33) fermant l'extrémité axiale proximale (25) de la manchette (23), le corps (33) présentant une surface externe (35) définissant une portée tronconique externe (37) coaxiale à l'axe central (C') et engagée à l'intérieur de l'extrémité axiale proximale (27), et
- une bague (43) liée au réservoir interne (3), la bague (43) présentant une surface interne (45) définissant une portée tronconique interne (47) coaxiale à l'axe central (C') et entourant l'extrémité axiale proximale (27), l'extrémité axiale proximale (27) de la manchette (23) étant pincée entre la portée tronconique externe (37) et la portée tronconique interne (47).

## Description

L'invention concerne en général le stockage d'un fluide cryogénique.

Une unité de stockage de fluide cryogénique comprend typiquement un réservoir interne délimitant intérieurement un volume de stockage du fluide cryogénique, un réservoir externe dans lequel est logé le réservoir interne et une suspension suspendant le réservoir interne au réservoir externe.

Le réservoir interne et le réservoir externe délimitent entre eux un espace intermédiaire maintenu à très basse pression. Un isolant thermique est de préférence déposé sur le réservoir interne pour limiter les échanges thermiques par rayonnement entre le réservoir interne et le réservoir externe. Le vide régnant dans l'espace intermédiaire permet de limiter les transferts thermiques par convection.

La suspension comprend une liaison fixe à une extrémité du réservoir interne, et une liaison glissante à l'extrémité opposée de ce réservoir interne. Elle doit supporter le réservoir interne en toutes circonstances. Quand l'unité de stockage est embarquée à bord d'un véhicule tel qu'un camion, la suspension est notamment soumise à des sollicitations résultant de l'état de la route, de l'accélération ou du freinage du camion ou de choc en cas d'accident. La suspension doit rester opérationnelle pendant toute la durée de vie du réservoir, c'est-à-dire de 15 à 25 ans.

Par ailleurs, la suspension doit être thermiquement la plus isolante possible, c'est-à-dire transmettre le moins possible de chaleur du réservoir externe au réservoir interne, notamment par conduction.

Dans ce contexte, l'invention vise à proposer une solution permettant de satisfaire les exigences ci-dessus.

A cette fin, l'invention porte selon un premier aspect sur l'unité de stockage de fluide cryogénique, comprenant un réservoir interne délimitant intérieurement un volume de stockage du fluide cryogénique, un réservoir externe dans lequel est logé le réservoir interne, et une suspension suspendant le réservoir interne au réservoir externe;
la suspension comprenant une liaison comportant :
   - une manchette en un matériau composite présentant un axe central;
   - une liaison proximale d'une extrémité axiale proximale de la manchette au réservoir interne ;
   - une liaison distale d'une extrémité axiale distale de la manchette au réservoir externe;
la liaison proximale comprenant :
   - un corps fermant l'extrémité axiale proximale de la manchette, le corps présentant une surface externe définissant une portée tronconique externe coaxiale à l'axe central et engagée à l'intérieur de l'extrémité axiale proximale, et
   - une bague liée au réservoir interne, la bague présentant une surface interne définissant une portée tronconique interne coaxiale à l'axe central et entourant l'extrémité axiale proximale, l'extrémité axiale proximale de la manchette étant pincée entre la portée tronconique externe et la portée tronconique interne.

L'utilisation d'une manchette en un matériau composite permet de réduire drastiquement les transferts thermiques par conduction du réservoir externe au réservoir interne par rapport à une suspension faite d'acier. Le matériau composite a en effet une conductivité thermique extrêmement réduite. En particulier, cette conductivité thermique est beaucoup plus faible que la conductivité thermique de l'acier, qui est couramment employé pour réaliser les suspensions des unités de stockage de fluide cryogénique.

La fixation de la manchette au réservoir interne est réalisée par le biais de la portée externe tronconique et de la portée interne tronconique, qui pincent entre elles l'extrémité axiale proximale de la manchette.

Une telle fixation permet un excellent accrochage de la manchette au réservoir interne. L'effort est réparti sur toute la surface de l'extrémité axiale proximale de la manchette.

La coopération des deux portées tronconiques empêche tout arrachement sous l'effet d'une sollicitation s'exerçant axialement.

L'utilisation d'un matériau composite pour la manchette permet en outre d'alléger l'unité de stockage tout en conférant une excellente résistance mécanique à la suspension.

L'unité de stockage peut en outre représenter une ou plusieurs des caractéristiques ci-dessous, considérées individuellement ou selon toutes les combinaisons techniquement possibles :
- l'extrémité axiale proximale de la manchette présente une forme tronconique ;
- l'extrémité axiale proximale de la manchette, la portée tronconique externe et la portée tronconique interne présentent un même angle de conicité ;
- la portée tronconique externe et la portée tronconique interne présentent un diamètre croissant axialement vers l'intérieur du réservoir interne ;
- la surface externe du corps définit une portée cylindrique externe décalée vers l'intérieur du réservoir interne par rapport à la portée tronconique externe et coaxiale à l'axe central, la surface interne de la bague définissant une portée cylindrique interne décalée vers l'intérieur du réservoir interne par rapport à la portée tronconique interne et coaxiale à l'axe central, la portée cylindrique externe étant engagée dans la portée cylindrique interne et rigidement fixée contre la portée cylindre interne ;
- la manchette comprend un tronçon central raccordant l'extrémité axiale proximale à l'extrémité axiale distale, l'extrémité axiale distale comprenant un tronçon terminal et un épaulement raccordant le tronçon terminal au tronçon central, l'épaulement étant rentrant à partir du tronçon central ;
- la liaison distale comprend un corps de révolution interne logé à l'intérieur de l'extrémité axiale distale et un corps de révolution externe entourant l'extrémité axiale distale et rigidement fixé au corps de révolution interne, l'épaulement étant pincé axialement entre le corps de révolution interne et le corps de révolution externe ;
- la liaison comprend un tube externe entourant la manchette, la bague de la liaison proximale étant liée au réservoir interne par l'intermédiaire du tube externe ;
- une couche d'isolation thermique est interposée entre le tube externe et la manchette ;
- au moins un disque portant une isolation thermique est logé à l'intérieur de la manchette et obture une section interne de la manchette.

Selon un second aspect, l'invention porte sur un procédé de fabrication d'une unité de stockage ayant les caractéristiques ci-dessus, le procédé comprenant les étapes suivantes :
- engagement de la portée externe tronconique du corps axialement à l'intérieur de l'extrémité axiale proximale de la manchette, et
- insertion de la bague autour de l'extrémité axiale proximale, jusqu'à ce que l'extrémité axiale proximale de la manchette soit pincée entre la portée tronconique externe et la portée tronconique interne ;
- fixation de la bague au corps.

D'autres caractéristiques et avantages de l'invention ressortiront de la description détaillée qui en est donnée ci-dessous, à titre indicatif et nullement limitatif, en référence aux figures annexées, parmi lesquelles :
- La figure 1 est une vue en section axiale d'une unité de stockage de fluide cryogénique selon l'invention, prise dans un plan vertical contenant l'axe central du réservoir interne ;
- La figure 2 est une vue agrandie d'une extrémité de l'unité de stockage, en section dans un plan vertical contenant l'axe central du réservoir interne, mais considéré suivant une direction diamétralement opposée à celle de la figure 1 ;
- La figure 3 est une vue agrandie de la liaison liant l'extrémité du réservoir interne à l'extrémité du réservoir externe sur la figure 2 ;
- La figure 4 est une représentation schématique simplifiée du tissage utilisé pour le matériau composite constituant la manchette de la liaison de la figure 3 ; et
- La figure 5 illustre une partie des étapes du procédé de fabrication de l'invention.

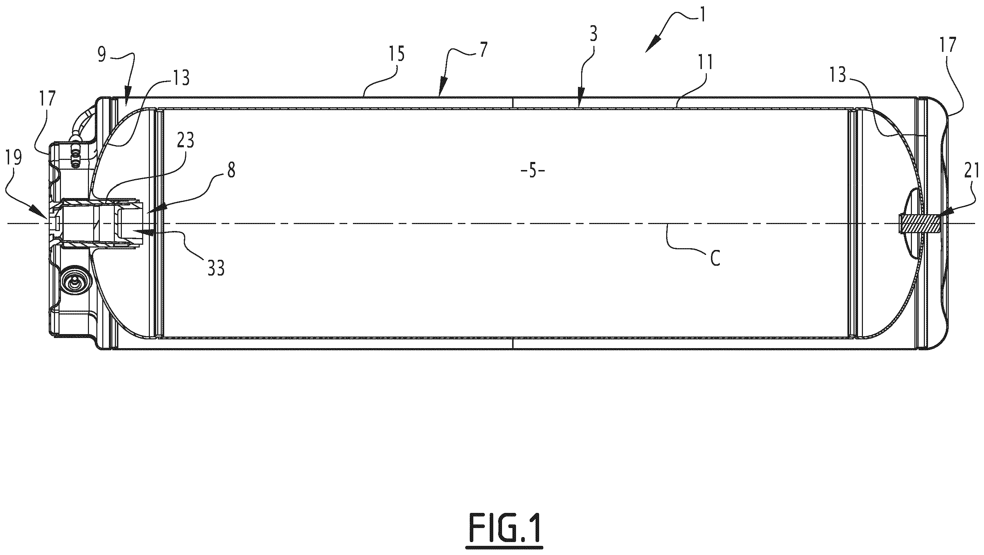

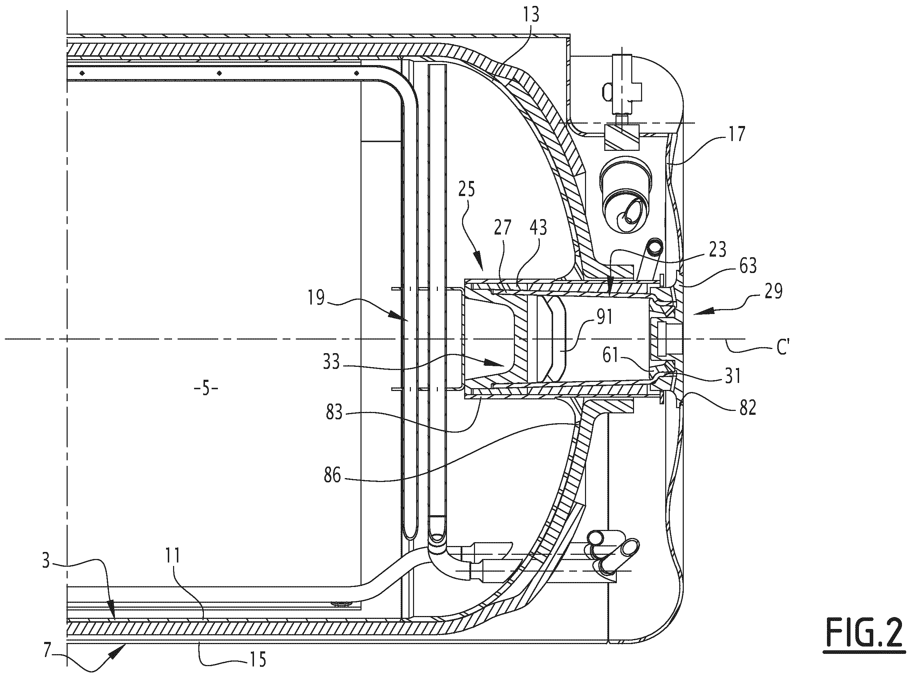

L'unité de stockage de fluide cryogénique 1 représentée sur les figures 1 et 2 est destinée à stocker un fluide cryogénique. On entend par fluide cryogénique un fluide à température très basse, pouvant se trouver au moins partiellement à l'état liquide à l'intérieur de l'unité de stockage 1.

Ce fluide est typiquement de l'hydrogène, adapté à un moteur à combustion interne ou à une pile à combustible. En variante, le fluide est un gaz naturel tel que le méthane CH₄, l'ammoniac ou tout autre fluide adapté à un moteur à combustion interne. Dans une autre variante, le fluide est un fluide cryogénique tel que l'hélium, l'azote, ou tout autre fluide adapté pour des installations industrielles.

L'unité de stockage 1 est typiquement prévue pour être embarquée à bord d'un véhicule, par exemple un véhicule automobile, un train, un bateau ou tout autre véhicule.

Le véhicule automobile est par exemple une voiture, un véhicule utilitaire, un camion, etc.

L'unité de stockage est typiquement destinée à alimenter un moteur à combustion interne équipant un véhicule automobile.

En variante, l'unité de stockage 1 est destinée à alimenter une pile à combustible. Par exemple, la pile à combustible est configurée pour produire de l'électricité et alimenter électriquement un moteur à propulsion électrique du véhicule.

L'unité de stockage de fluide cryogénique 1 comprend un réservoir interne 3 délimitant intérieurement un volume 5 de stockage de fluide cryogénique, un réservoir externe 7 à l'intérieur duquel est logé le réservoir interne 3, et une suspension 8 suspendant le réservoir interne 3 au réservoir externe 7.

Le réservoir interne 3 et le réservoir externe 7 sont séparés l'un de l'autre par un espace intermédiaire 9 maintenu à basse pression.

Typiquement, l'espace intermédiaire 9 est maintenu sous un vide poussée. Ce vide est typiquement de l'ordre de 10⁻⁵ mbar, de manière à limiter fortement le transfert thermique par convection depuis le réservoir externe 7 vers le réservoir interne 3.

Une isolation thermique non représentée est interposée entre le réservoir interne 3 et le réservoir externe 7. L'isolation thermique est typiquement posée sur la surface externe du réservoir interne 3. Elle est par exemple de type MLI (Multi Layer Isolation, ou Isolation Multicouche) et comporte une pluralité de feuilles métalliques superposées les unes aux autres, avec interposition de couches de fibres.

Le réservoir interne 3 présente un axe central C. Dans l'exemple représenté, cet axe est horizontal.

Le réservoir interne 3 comporte une virole 11 fermée à ses deux extrémités axiales opposées par des fonds internes 13.

La virole 11 est cylindrique, centrée sur l'axe central C.

Le réservoir externe 7 est coaxial au réservoir interne 3.

Il comporte une virole 15, fermée à ses deux extrémités axiales opposées par des fonds externes 17.

La virole 15 est cylindrique, centrée sur l'axe central C.

La suspension 8 comporte typiquement deux liaisons, une liaison fixe 19 et une liaison glissante 21. L'invention porte sur la liaison fixe 19.

La liaison 19 comporte, comme illustré sur la figure 2 :
- une manchette 23 en un matériau composite, présentant un axe central C' ;
- une liaison proximale 25 d'une extrémité axiale proximale 27 de la manchette 23 au réservoir interne 3 ;
- une liaison distale 29 d'une extrémité axiale distale 31 de la manchette 23 au réservoir externe 7.

L'axe central C' de la manchette 23 est typiquement aligné avec l'axe central C du réservoir interne.

La liaison proximale 25 lie la manchette 23 à une extrémité axiale du réservoir interne 3.

En d'autres termes, la liaison proximale 25 lie l'extrémité axiale proximale 27 de la manchette 23 à l'un des fonds internes 13 du réservoir 3.

La liaison distale 29 lie la manchette 23 à une extrémité axiale du réservoir externe 7.

En d'autres termes, elle lie l'extrémité axiale distale 31 de la manchette 23 à un fond externe 17 du réservoir externe 7.

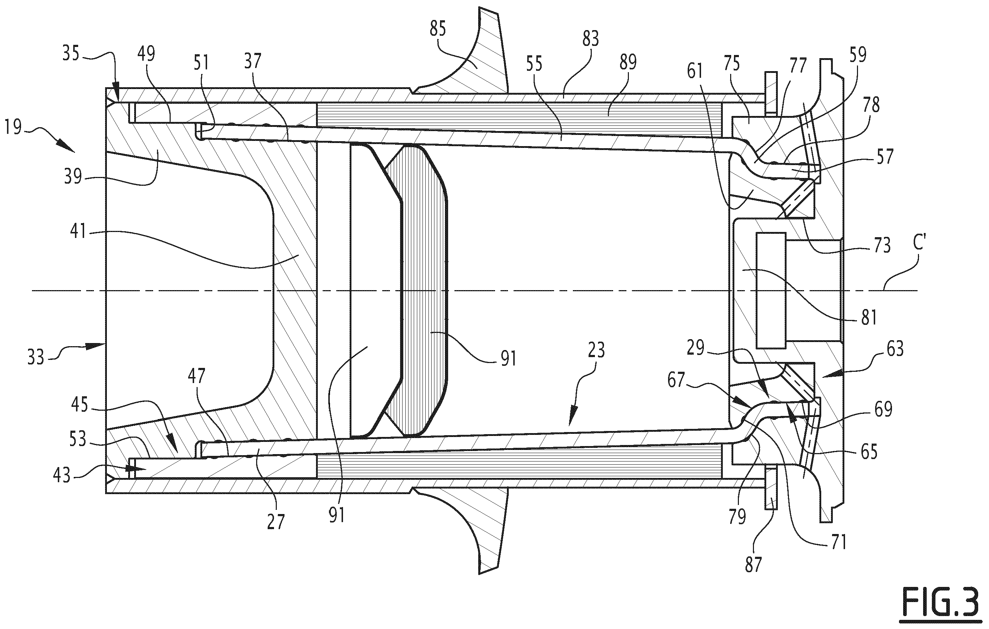

Comme visible sur la figure 3, la liaison proximale 25 comprend un corps 33 fermant l'extrémité axiale proximale 27 de la manchette 23.

Le corps 33 est une pièce de révolution autour de l'axe central C'.

Le corps 33 présente une surface externe 35 définissant une portée tronconique externe 37 coaxiale à l'axe central C'.

Plus précisément, le corps 33 comporte une paroi tubulaire 39 coaxiale à l'axe central C', fermée à une extrémité par un fond 41. La surface externe 35 est définie par la paroi 39. Elle est tournée radialement vers l'extérieur de la paroi tubulaire 39.

La portée tronconique externe 37 est engagée à l'intérieur de l'extrémité proximale axiale 27.

La liaison proximale 25 comporte encore une bague 43 liée au réservoir interne 3. La bague 43 présente une surface interne 45 délimitant une portée tronconique interne 47 coaxiale à l'axe central C'. La bague 43 entoure l'extrémité axiale proximale 27.

La bague 43 présente une forme générale tubulaire. La surface interne 45 est la surface de la bague 43 tournée radialement vers l'axe central C'.

Comme visible sur la figure 3, l'extrémité axiale proximale 27 de la manchette 23 est pincée entre la portée tronconique externe 37 et la portée tronconique interne 47. En d'autres termes, l'extrémité axiale proximale 27 est fortement serrée entre la portée tronconique externe 37 et la portée tronconique interne 47.

La portée tronconique externe 37 est au contact d'un côté radialement interne de l'extrémité axiale proximale 27, et la portée tronconique interne 47 est au contact d'un côté externe de l'extrémité proximale axiale 27.

Suivant l'axe central C', la portée tronconique externe 37 et la portée tronconique interne 47 sont sensiblement au même niveau. Elles sont ainsi radialement en vis-à-vis.

L'extrémité axiale proximale 27 de la manchette 23 présente une forme tronconique.

L'extrémité axiale proximale 27 de la manchette 23, la portée tronconique externe 37 et la portée tronconique interne 47 présentent un même angle de conicité.

En d'autres termes, elles sont toutes trois coaxiales à l'axe central C', et ont chacune une forme tronconique de base circulaire. Elles sont générées par une génératrice ayant ledit angle de conicité par rapport à l'axe central C'.

L'angle de conicité est typiquement compris entre 1° et 15°, de préférence entre 2° 10°, et vaut par exemple 3°.

La portée tronconique externe 37 et la portée tronconique interne 47 présentent un diamètre croissant axialement vers l'intérieur du réservoir interne 3.

La surface externe 35 du corps 33 définit également une portée cylindrique externe 49 décalée vers l'intérieur du réservoir interne 3 par rapport à la portée tronconique externe 37.

La portée cylindrique externe 49 est coaxiale à l'axe central C'. Elle jouxte la portée tronconique externe 37. Elle est séparée de la portée tronconique externe 37 par un épaulement 51. Cet épaulement est sensiblement annulaire et centré sur l'axe central C'. Il présente une largeur radiale sensiblement égale à l'épaisseur de l'extrémité axiale proximale 27 de la manchette 23.

Le diamètre de la portée cylindrique externe 49 est ainsi plus grand que le diamètre de la portée tronconique externe 37.

De la même manière, la surface interne 45 de la bague 43 définit une portée cylindrique interne 53 décalée vers l'intérieur du réservoir interne 3 par rapport à la portée tronconique interne 47.

La portée cylindrique interne 53 est coaxiale à l'axe central C'. Elle jouxte la portée tronconique interne 47.

Le diamètre de la portée cylindrique interne 53 est sensiblement égal au plus grand diamètre de la portée tronconique interne 47, c'est-à-dire au diamètre pris à l'extrémité formant la jonction avec la portée cylindrique interne 53.

En d'autres termes, il n'existe pas de rupture de niveau entre la portée tronconique interne 47 et la portée cylindrique interne 53.

La portée cylindrique externe 49 est engagée dans la portée cylindrique interne 53 et rigidement fixée contre cette portée cylindrique interne 53.

Le diamètre interne de la portée cylindrique interne 53 est sensiblement égal au diamètre externe de la portée cylindrique externe 49.

La bague 43 et le corps 33 sont en un matériau métallique. Par exemple, ils sont en acier.

Dans l'exemple représenté, la portée cylindrique externe 49 et la portée cylindrique interne 53 sont rigidement fixées l'une à l'autre par soudage, de préférence par un soudage de type laser pour ne pas chauffer excessivement la liaison et ne pas endommager la manchette 23 en matériau composite.

En plus de la fixation par serrage entre les deux portées tronconiques, l'extrémité axiale proximale 27 est également fixée à la bague 43 et au corps 33, de préférence par collage.

A cette fin, une gorge non représentée contenant de la colle est ménagée dans la portée tronconique externe 37.

De préférence, une autre gorge contenant de la colle est ménagée dans la portée tronconique interne 47.

La colle contenue dans la ou les gorge(s) permet de rendre la fixation de l'extrémité axiale proximale 27 au réservoir interne 3 plus résistante à l'arrachage suivant l'axe central C'.

La manchette 23 présente encore un tronçon central 55 raccordant l'extrémité axiale proximale 27 à l'extrémité axiale distale 31.

L'extrémité axiale distale 31 comprend quant à elle un tronçon terminal 57 et un épaulement 59 raccordant le tronçon terminal 57 au tronçon central 55.

L'épaulement 59 est rentrant à partir du tronçon central 55.

En d'autres termes, le tronçon terminal 57 présente une section réduite par rapport au tronçon central 55.

La liaison distale 29 comporte un corps de révolution interne 61 logé à l'intérieur de l'extrémité axiale distale 31. Elle comporte également un corps de révolution externe 63 entourant l'extrémité axiale distale 31 et rigidement fixé au corps de révolution interne 61.

L'épaulement 59 est pincé axialement entre le corps de révolution interne 61 et le corps de révolution externe 63.

Le corps de révolution interne 61 est typiquement un anneau. Il est de révolution autour de l'axe central C'.

Il présente radialement vers l'extérieur une surface d'anneau externe 65 ayant une forme correspondant à celle de la surface radialement interne 67 de l'extrémité axiale distale 31. Cette surface d'anneau externe 65 est plaquée contre la surface radialement interne 67 et fixée à celle-ci par collage.

La surface d'anneau externe 65 présente une surface 69 sensiblement cylindrique ou tronconique plaquée contre le tronçon terminal 59, prolongée par une surface 71 fortement inclinée par rapport à l'axe central C'. Cette surface fortement inclinée 71 est plaquée contre l'épaulement 59.

Le corps de révolution interne 61 délimite un orifice central 73.

Dans l'exemple représenté, le corps de révolution externe 63 obture l'extrémité axiale distale 31 de la manchette 23.

Sur sa face tournée axialement vers le réservoir interne 3, le corps de révolution externe 63 porte une couronne 75 à contour fermé centrée sur l'axe central C'.

La couronne 75 est délimitée radialement vers l'axe central C' par une surface de couronne interne 77 ayant une forme correspondant à celle de la surface radialement externe 78 de l'extrémité axiale distale 31. Cette surface de couronne interne 77 est plaquée contre la surface radialement externe 78 et fixée à celle-ci par collage.

La surface de couronne interne 77 présente une surface sensiblement cylindrique ou tronconique plaquée contre le tronçon terminal 59, d'un côté radialement externe de ce tronçon. Cette surface est prolongée par une surface 79 fortement inclinée par rapport à l'axe central C', plaquée contre l'épaulement 59.

L'épaulement 59 est serré contre d'un côté la surface 71 et de l'autre la surface 79. Ces surfaces étant fortement inclinées par rapport à l'axe central C', l'extrémité axiale distale 31 de la manchette 23 est bloquée axialement en position. L'épaulement 59 garantit que la manchette 23 ne peut pas être arrachée en cas de traction suivant l'axe central C'.

Le corps de révolution externe 63 comporte encore un plot central 81 engagé dans l'orifice central 73. Le diamètre externe du plot central 81 correspond au diamètre interne de l'orifice central 73.

Le corps de révolution externe 63 est rigidement fixé au réservoir externe 7. Il est engagé dans un orifice 82 du réservoir externe 7 (figure 2). Son bord périphérique est soudé étanche sur le bord de l'orifice 82.

Les corps de révolution 61 et 63 sont métalliques.

Ils sont soudés l'un à l'autre, typiquement par transparence. Ils sont collés à l'extrémité axiale distale 31.

La liaison 19 comporte encore un tube externe 83 entourant la manchette 23.

La bague 43 de la liaison proximale est liée au réservoir interne par l'intermédiaire du tube externe 83.

Pour ce faire, la bague 43 est engagée à l'intérieur du tube externe 83 et rigidement fixée à celui-ci.

Le tube externe 83 est métallique. La bague 43 est typiquement soudée au tube externe 83.

Le tube externe 83 porte sur sa surface externe une couronne 85 de fixation au réservoir interne. La couronne 85 est rigidement fixée au tube externe 83. Elle est engagée dans un orifice 86 du réservoir interne 3 (figure 2). Son bord périphérique est soudé étanche sur le bord de l'orifice 86.

Le tube externe 83 est coaxial à l'axe central C'. Il s'étend axialement depuis la bague 43 jusqu'au corps de révolution externe 63. A son extrémité opposée à la bague 43, il porte une rondelle 87 formant limiteur de mouvement.

La rondelle 87 entoure la couronne 75, avec un jeu réduit entre la couronne 75 et le bord interne de la rondelle 87. La rondelle 87 coopère avec le corps de révolution externe 63 pour limiter le débattement radial de la manchette 23. En cas de rupture de la manchette 23, le réservoir interne 3 n'est plus accroché au réservoir externe 7. La rondelle 87 limite le mouvement entre les deux réservoirs 3, 7. Ainsi, la probabilité de rupture des tubes venant de l'intérieur du réservoir interne 3 et traversant le réservoir extérieur 7 est faible.

Une couche d'isolation thermique 89 est interposée entre la manchette 23 et le tube externe 83. Cette couche d'isolation thermique 89 remplit sensiblement tout l'espace radialement entre la manchette 23 et le tube externe 83, et axialement entre la bague 43 et le corps de révolution externe 63.

La couche d'isolation thermique 89 est du même type que celle isolant le réservoir interne 3 du réservoir externe 7. En d'autres termes, c'est une couche d'isolation thermique de type MLI (Multi Layer Isolation, ou Isolation Multicouches). Elle comprend une pluralité de feuilles métalliques superposées les unes aux autres, avec interposition de couches de fibres.

Une telle structure est connue et ne sera pas décrite ici en détail.

La couche d'isolation thermique 89 permet de fortement limiter le rayonnement entre la manchette 23 et le tube externe 83.

Par ailleurs, comme visible sur la figure 3, au moins un disque 91 portant une isolation thermique est logé à l'intérieur de la manchette 23 et obture une section interne de la manchette 23.

Typiquement, plusieurs disques 91 sont agencés les uns derrière les autres, chaque disque 91 obturant une section intérieure de la manchette 23.

Chaque disque 91 porte une isolation thermique du même type que la couche 89, c'est-à-dire une isolation thermique de type MLI.

Chaque disque 91 obture une section droite du volume intérieur de la manchette 23. La section considérée ici est une section prise perpendiculairement à l'axe central C', et délimitée par la surface interne de la manchette 23. Chaque disque 91 présente un bord radialement externe de même forme que la surface interne de la manchette 23 dans ladite section.

L'isolation portée par les disques 91 permet de limiter le rayonnement thermique à l'intérieur de la manchette 23, en particulier le rayonnement thermique émis par les corps de révolution 61 et 63 vers le corps 33 et vers la surface interne de la manchette 23.

Avantageusement, la manchette 23 présente une forme générale tronconique.

Ainsi, le tronçon central 55 constitue le prolongement de l'extrémité axiale proximale 27. Il est lui-même tronconique, coaxial à l'axe central C', avec le même angle de conicité que l'extrémité axiale proximale 27.

Le manchon 23 est en matériau composite comprenant, de manière classique, des fibres noyées dans une matrice de résine.

Les fibres sont choisies avantageusement dans la liste suivante : fibres de verre E, fibres de verre ECR, fibres de verre S, fibres de silice, fibres d'aramide, notamment en kevlar, ou fibres de carbone.

De préférence, les fibres sont des fibres de verre E pour des raisons de coût et de performance.

Les fibres sont enchevêtrées les unes avec les autres et forment un tressage en trois dimensions.

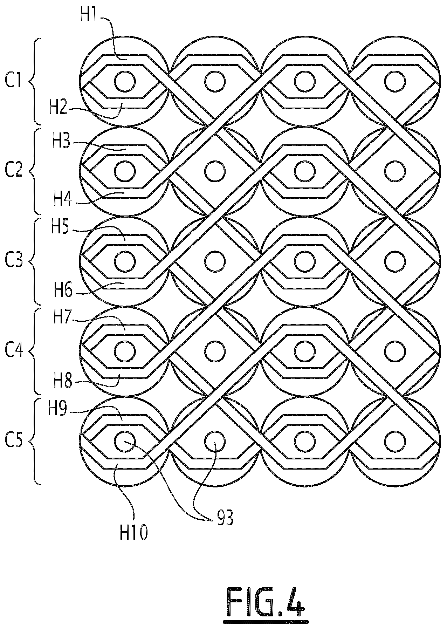

Ainsi, le matériau composite comporte une pluralité de fibres axiales, référencées 93 sur la figure 4, réparties en plusieurs couches superposées.

Par exemple, les fibres axiales 93 sont réparties en cinq couches superposées.

Les fibres axiales 93 s'étendent selon des génératrices du manchon 23. Elles sont réparties circonférentiellement de manière régulière autour de l'axe central C'.

Le matériau composite comporte également des fibres H1 à H10 agencées hélicoïdalement autour de l'axe central C'. Les fibres hélicoïdales H1 à H10 sont agencées de manière à solidariser les couches les unes avec les autres.

Chaque fibre hélicoïdale présente un angle d'hélice compris entre 30 et 70°, valant par exemple de préférence 45°. Une moitié des fibres s'enroule circonférentiellement dans un premier sens de rotation autour de l'axe central C', et une autre moitié des fibres s'enroule circonférentiellement dans le sens de rotation opposé autour de l'axe central C'.

L'organisation des fibres hélicoïdales H1 à H10 est représenté schématiquement sur la figure 4. Cette figure représente les cinq couches C1 à C5 superposées. Les fibres axiales 93 sont représentées par des points.

Dix fibres hélicoïdales H1 à H10 sont représentées schématiquement sur la figure 4. La fibre hélicoïdale H1 est enchevêtrée avec les fibres axiales 93 des couches C1 et C2. La fibre hélicoïdale H2 est enchevêtrée seulement avec les fibres axiales 93 de la couche C1. La fibre hélicoïdale H3 est enchevêtrée avec les fibres axiales 93 des couches C2 et C3. La fibre hélicoïdale H4 est enchevêtrée avec les fibres axiales 93 des couches C2 et C3. La fibre hélicoïdale H5 est enchevêtrée avec les fibres axiales 93 des couches C3 et C4. La fibre hélicoïdale H6 est enchevêtrée avec les fibres axiales 93 des couches C2 et C3. La fibre hélicoïdale H7 est enchevêtrée avec les fibres axiales 93 des couches C4 et C5. La fibre hélicoïdale H8 est enchevêtrée avec les fibres axiales 93 des couches C3 et C4. La fibre hélicoïdale H9 est enchevêtrée seulement avec les fibres axiales 93 de la couche C5. La fibre hélicoïdale H10 est enchevêtrée avec les fibres axiales 93 des couches C4 et C5.

On garantit ainsi un lien fort entre toutes les couches du matériau composite, et ce sur toute la surface de la manchette 23.

Cette organisation présente également l'avantage que la manchette 23 présente exactement l'épaisseur requise sur toute sa surface et ne pose pas de problème de délaminage entre les couches ni de positionnement relatif entre les différentes couches.

Dans un exemple de réalisation pour une unité de stockage d'hydrogène cryogénique ayant une capacité de 750 litres, la longueur de la manchette 23 est d'environ 150 mm. Le matériau composite présente une conductivité de 0,1 W/m.K à 20K et de 0,6 W/m.K à 20°C. L'entrée thermique totale de la manchette est de 0,5 W environ. Le plus grand diamètre de la manchette 23 est d'environ 78 mm. L'épaisseur de la manchette 23 varie de 5 mm au niveau de son petit diamètre à 4,5 mm au niveau de son grand diamètre.

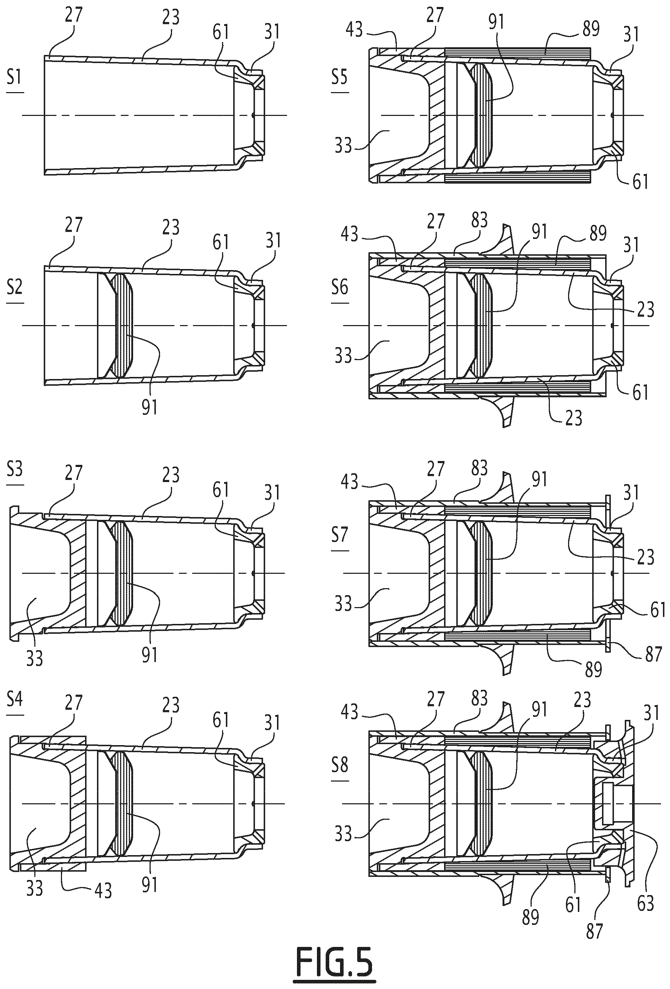

Le procédé de fabrication de l'unité de stockage 1 va maintenant être décrit, en référence à la figure 5.

Le procédé de fabrication comprend une première étape S1 d'obtention de la manchette 23, et d'engagement du corps de révolution interne 61 dans la manchette 23.

Du fait de la forme générale tronconique de la manchette 23, le corps de révolution interne 61 est introduit à l'intérieur de la manchette 23 par l'extrémité axiale proximale 27. Il est déplacé axialement jusqu'à l'extrémité axiale distale 31 et collé sur l'extrémité axiale distale 31.

A l'étape S2, le ou chaque disque d'isolation thermique 91 est mis en place à l'intérieur de la manchette 23. Les disques d'isolation thermique 91 sont introduits par l'extrémité axiale proximale 27 et déplacés axialement jusqu'à leur position finale.

A l'étape S3, la portée tronconique externe 37 du corps 33 est engagée axialement à l'intérieur de l'extrémité axiale proximale 27 de la manchette 23.

Elle est engagée jusqu'à ce que l'extrémité axiale proximale 27 soit en contact avec la portée tronconique externe 37. Elle est de préférence collée sur l'extrémité axiale proximale 27.

A l'étrape S4, la bague 43 est insérée autour de l'extrémité axiale proximale 27, jusqu'à ce que l'extrémité axiale proximale 27 de la manchette 23 soit pincée entre la portée tronconique externe 37 et la portée tronconique interne 47.

La bague 43 est d'abord engagée autour de l'extrémité axiale distale 31 de la manchette 23, puis déplacée axialement vers l'extrémité axiale proximale 27. Elle est orientée avec la portée cylindrique interne 53 tournée vers le corps 33.

La bague 43 est déplacée axialement jusqu'à ce que l'extrémité axiale proximale 27 de la manchette 23 soit suffisamment pressée entre les deux portées tronconiques 37, 47. A ce stade, la portée cylindrique interne 53 et la portée cylindrique externe 49 sont en vis-à-vis l'une de l'autre et en contact l'une avec l'autre.

Les deux portées cylindriques 49, 53 sont ensuite soudées l'une à l'autre.

A l'étape S5, la couche isolante 89 est mise en place autour de la manchette 23.

A l'étape S6, le tube externe 83, portant la couronne 85 est mis en place autour de la couche isolante 89, et soudé à la bague 43.

A l'étape S7, la rondelle 87 est fixée à l'extrémité du tube externe 83.

Enfin, à l'étape S8, le corps de révolution externe 63 est engagé autour de l'extrémité axiale distale 31 et collé contre cette extrémité axiale. Puis, le corps de révolution interne 61 et le corps de révolution externe 63 sont soudés l'un à l'autre.

Dans une étape non représentée sur la figure 5, le sous-ensemble obtenu à l'issu de l'étape S8 est fixé au réservoir interne 3. Pour ce faire, le bord périphérique de la couronne 85 est soudé à l'orifice 86 correspondant du réservoir interne 3.

Après introduction du réservoir interne 3 dans le réservoir externe 7, le corps de révolution externe 63 est rigidement fixé au réservoir externe 7. Pour ce faire, le bord périphérique du corps de révolution externe 63 est soudé dans l'orifice 82 correspondant du réservoir externe 7.

## Revendications

1. Unité de stockage de fluide cryogénique (1), comprenant un réservoir interne (3) délimitant intérieurement un volume (5) de stockage du fluide cryogénique, un réservoir externe (7) dans lequel est logé le réservoir interne (3), et une suspension (8) suspendant le réservoir interne (3) au réservoir externe (7) ;
la suspension (8) comprenant une liaison (19) comportant :
- une manchette (23) en un matériau composite présentant un axe central (C') ;
- une liaison proximale (25) d'une extrémité axiale proximale (27) de la manchette (23) au réservoir interne (3) ;
- une liaison distale (29) d'une extrémité axiale distale (31) de la manchette (23) au réservoir externe (7) ;
la liaison proximale (25) comprenant :
- un corps (33) fermant l'extrémité axiale proximale (27) de la manchette (23), le corps (33) présentant une surface externe (35) définissant une portée tronconique externe (37) coaxiale à l'axe central (C') et engagée à l'intérieur de l'extrémité axiale proximale (27), et
- une bague (43) liée au réservoir interne (3), la bague (43) présentant une surface interne (45) définissant une portée tronconique interne (47) coaxiale à l'axe central (C') et entourant l'extrémité axiale proximale (27), l'extrémité axiale proximale (27) de la manchette (23) étant pincée entre la portée tronconique externe (37) et la portée tronconique interne (47).

2. Unité de stockage (1) selon la revendication 1, dans laquelle l'extrémité axiale proximale (27) de la manchette (23) présente une forme tronconique.

3. Unité de stockage (1) selon la revendication 2, dans laquelle l'extrémité axiale proximale (27) de la manchette (23), la portée tronconique externe (37) et la portée tronconique interne (47) présentent un même angle de conicité.

4. Unité de stockage (1) selon l'une quelconque des revendications précédentes, dans laquelle la portée tronconique externe (37) et la portée tronconique interne (47) présentent un diamètre croissant axialement vers l'intérieur du réservoir interne (3).

5. Unité de stockage (1) selon l'une quelconque des revendications précédentes, dans laquelle la surface externe (35) du corps (33) définit une portée cylindrique externe (49) décalée vers l'intérieur du réservoir interne (3) par rapport à la portée tronconique externe (37) et coaxiale à l'axe central (C'), la surface interne (45) de la bague (43) définissant une portée cylindrique interne (53) décalée vers l'intérieur du réservoir interne (3) par rapport à la portée tronconique interne (47) et coaxiale à l'axe central (C'), la portée cylindrique externe (49) étant engagée dans la portée cylindrique interne (53) et rigidement fixée contre la portée cylindre interne (53).

6. Unité de stockage (1) selon l'une quelconque des revendications précédentes, dans laquelle la manchette (23) comprend un tronçon central (55) raccordant l'extrémité axiale proximale (27) à l'extrémité axiale distale (31), l'extrémité axiale distale (31) comprenant un tronçon terminal (57) et un épaulement (59) raccordant le tronçon terminal (57) au tronçon central (55), l'épaulement (59) étant rentrant à partir du tronçon central (55).

7. Unité de stockage (1) selon la revendication 6, dans laquelle la liaison distale (29) comprend un corps de révolution interne (61) logé à l'intérieur de l'extrémité axiale distale (31) et un corps de révolution externe (63) entourant l'extrémité axiale distale (31) et rigidement fixé au corps de révolution interne (61), l'épaulement (59) étant pincé axialement entre le corps de révolution interne (61) et le corps de révolution externe (63).

8. Unité de stockage (1) selon l'une quelconque des revendications précédentes, dans laquelle la liaison (19) comprend un tube externe (83) entourant la manchette (23), la bague (43) de la liaison proximale (25) étant liée au réservoir interne (3) par l'intermédiaire du tube externe (83).

9. Unité de stockage (1) selon la revendication 8, dans laquelle une couche d'isolation thermique (89) est interposée entre le tube externe (83) et la manchette (23).

10. Unité de stockage (1) selon l'une quelconque des revendications précédentes, dans laquelle au moins un disque (91) portant une isolation thermique est logé à l'intérieur de la manchette (23) et obture une section interne de la manchette (23).

11. Procédé de fabrication d'une unité de stockage (1) selon l'une quelconque des revendication précédentes, le procédé comprenant les étapes suivantes :
- engagement de la portée externe tronconique (37) du corps (33) axialement à l'intérieur de l'extrémité axiale proximale (27) de la manchette (23), et
- insertion de la bague (43) autour de l'extrémité axiale proximale (27), jusqu'à ce que l'extrémité axiale proximale (27) de la manchette (23) soit pincée entre la portée tronconique externe (37) et la portée tronconique interne (47) ;
- fixation de la bague (43) au corps (33).
